Europäisches Patentamt

European Patent Office

Office européen des brevets

(11) Numéro de publication: **0 412 935 A1**

## (12) DEMANDE DE BREVET EUROPEEN

(21) Numéro de dépôt: 90810583.6

(22) Date de dépôt: 01.08.90

(51) Int. Cl.5: **H01M 6/52, C22B 3/00, C22B 7/00**

(30) Priorité: 08.08.89 CH 2918/89

(43) Date de publication de la demande:
**13.02.91 Bulletin 91/07**

(84) Etats contractants désignés:
**AT BE CH DE DK ES FR GB GR IT LI LU NL SE**

(71) Demandeur: **RECYTEC S.A.**
**c/o ORFIGEST S.A. 4, rue du Bassin**
**CH-2000 Neuchatel(CH)**

(72) Inventeur: **Hanulik, Jozef**
**Lerchenhalde 45**
**CH-8046 Zürich(CH)**

(74) Mandataire: **Werner, Guy et al**
**Bugnion S.A. Case postale 375 10 Route de**
**Florissant**
**CH-1211 Genève 12 - Champel(CH)**

(54) **Procédé de recyclage d'un mélange non trié de piles boutons usagées et d'autres objets métalliques et de récupération de leurs composants métalliques.**

(57) Procédé de recyclage d'un mélange non trié de piles boutons usagées et récupération de leurs composants métalliques comprenant une dissolution anodique des piles boutons, au cours de laquelle les métaux constituant ces piles sont dissous et redéposés sur une ou plusieurs cathodes, les oxydes métalliques se déposent dans le compartiment anodique et les déchets (plastique, papier, etc.) s'accumulent dans un panier anodique. Les oxydes sont réduits en métaux par décomposition thermique, le mercure est récupéré par distillation et les autres métaux sont récupérés par séparation électrolytique.

Fig.2

## PROCÉDÉ DE RECYCLAGE D'UN MÉLANGE NON TRIÉ DE PILES BOUTONS USAGÉES ET D'AUTRES OBJETS MÉTALLIQUES ET DE RÉCUPÉRATION DE LEURS COMPOSANTS MÉTALLIQUES.

Domaine de l'invention

La présente invention concerne un procédé pour le recyclage d'un mélange non trié de piles boutons usagées et/ou d'autres objets métalliques, et de récupération de leurs composants métalliques.

Art antérieur.

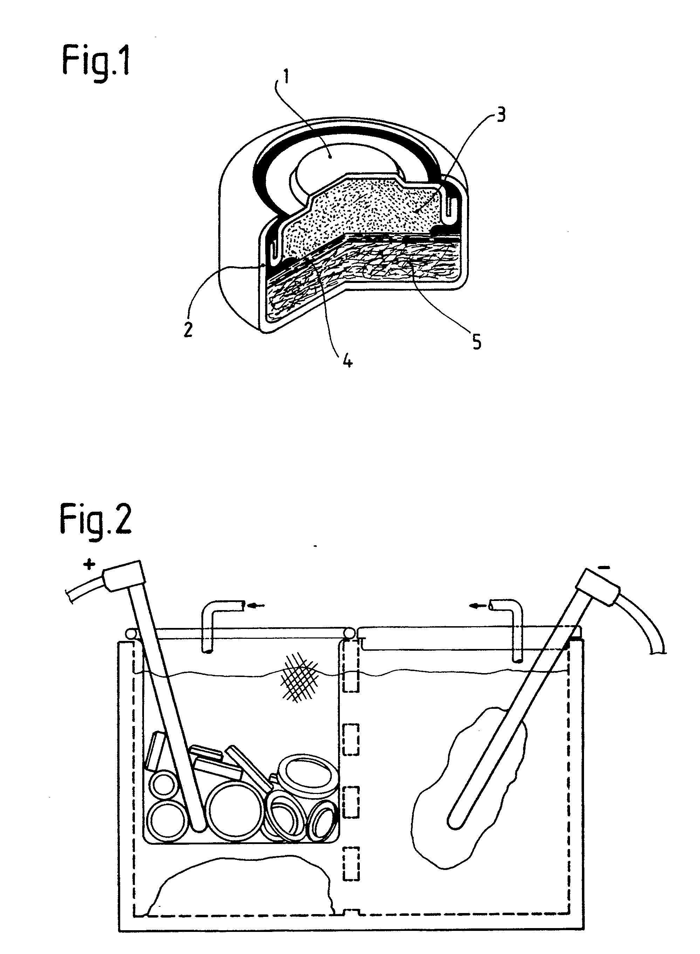

La consommation mondiale de piles boutons électriques est en croissance constante et se monte actuellement à environ 5 mia. de pièces par an ce qui représente environ 10.000 tonnes par an. Une pile bouton (voir fig. 1) consiste en un boîtier (2) en forme de coupelle (pôle positif) fermé par un couvercle (1) (pôle négatif). Aussi bien le boîtier que le couvercle sont généralement faits en acier recuit nickelé. L'épaisseur du nickelage est d'environ $5\mu$. Les électrodes positives (5) et négatives (3) consistent en pastilles comprimées contenues dans un fin grillage. Entre les électrodes se trouve une séparation microporeuse (4) faite en fibres de plastique non tissée (ou en papier). Les piles sont fermées de façon étanche par un joint de plastique autour du couvercle. Cet anneau d'étanchéité en plastique fait office d'isolant entre le boîtier et le couvercle. Les piles boutons ont une forme générale cylindrique, dont le diamètre est supérieur à la hauteur. Les diamètres se situent généralement entre 7 et 50 mm. et les hauteurs entre 5 et 10 mm. En plus des habituelles piles de forme circulaire, cette catégorie de piles comprend également des piles de forme ovale.
Les plus importants couples chimiques permettant de faire fonctionner ces piles boutons sont :

| - le couple Zn/HgO composition moyenne de ces piles : | Hg Zn électrolyte diaphragme, papier acier | 30 à 40 % environ 10 % 5 à 10 % 1 à 5 % le reste |
|---|---|---|
| - le couple Zn/Ag$_2$O composition moyenne de ces piles : | Ag Zn électrolyte diaphragme acier | 20 à 40 % environ 10 % 5 à 10 % 1 à 5 % le reste |

- le couple Zn/O$_2$; ces piles contiennent essentiellement du zinc et la cathode est faite en graphite poreux.
- Le couple Zn/MnO$_2$, bien que très employé dans les piles cylindriques de plus grande dimension, est plus rarement utilisé pour fabriquer des piles boutons.
- Le couple Cd/NiOOH, employé dans les accumulateurs rechargeables, contribue dans une moindre mesure à la production de déchet (en masse), parce que ces piles sont rechargeables plus de 500 fois.
- Les piles boutons au lithium, introduites récemment sur le marché n'ont encore qu'une faible importance quantitative.
De nombreux procédés ont été développés dans le passé pour récupérer les composants d'accumulateurs et de piles. Dans les procédés de recyclage d'accumulateurs au plomb, en général l'acide est enlevé et ensuite les enveloppes des accumulateurs sont découpées ou brisées par un autre moyen mécanique. Ensuite les plaques intérieures sont traitées chimiquement (en particulier pour récupérer le plomb).
Dans les procédés de recyclage d'accumulateurs Cd/Ni, ces accumulateurs sont d'abord brisés mécaniquement et l'électrolyte est enlevé par lavage. Ensuite les oxydes de nickel et de cadmium sont réduits à l'état métallique dans un four, sous atmosphère réductrice, et le cadmium est distillé à environ 900°C (point d'ébullition de Cd = 765°C). Le mélange fer-nickel n'est pas séparé mais vendu tel quel aux aciéries (voir par exemple EP-A-075 978).

Pour la récupération du zinc et du manganèse des piles du type $Zn/MnO_2$, on a par exemple proposé (EP-A-158 627) de pyrolyser les piles usagées, de laver et de sécher le résidu de pyrolyse, de le réduire à haute température, et de récupérer le zinc, qui distille, et le mélange fer-manganèse.

Pour recycler un mélange non trié de piles primaires, BOHAC dans Elektrizität-Anwendung in der Praxis, N° 1, Mars 1988 (application pratique de l'électricité) propose un procédé comprenant les étapes suivantes :
- deux étapes de broyage mécanique
- une séparation mécanique des composants légers et des composants lourds
- une séparation magnétique du fer
- la récupération des métaux lourds sous forme d'un mélange d'hydroxydes
- le traitement de la fraction fine (40 à 45 %) comprenant principalement les oxydes de manganèse, des poudres de carbone et de zinc et également le mercure par la chaleur sous atmosphère réductrice : le mercure distille à 800°C et le zinc à environ 1100°C.

Dans sa demande de brevet EP-A-274 059, le déposant décrit un procédé de recyclage de piles électriques de toutes compositions et formes, commençant par une pyrolyse du mélange non trié de piles, précédant la séparation électrolytique des composants. La pyrolyse est nécessaire pour détruire le matériau organique présent à l'extérieur et à l'intérieur des piles, mais doit être effectuée avec précaution pour éviter la formation de mélanges gazeux explosifs.

Etant donné que les dispositions légales de plusieurs pays développés interdisent à présent le dépôt direct de piles boutons contenant du mercure dans des décharges, les piles boutons sont collectées, souvent dans les magasins vendant les appareillages utilisant ces piles comme source d'énergie. Des tentatives ont été faites pour séparer les différentes piles boutons selon leur composition chimique, mais ceci reste encore une opération pénible et couteuse. Par conséquent, des mélanges de piles boutons de tous types chimiques, bien que séparées des piles de plus grande taille, s'accumulent en un déchet particulier, dangereux, qui ne peut pas être éliminé comme un déchet ordinaire, industriel ou domestique.

Pour récupérer les métaux d'un mélange de piles boutons, le brevet EP-A-069 117 décrit un procédé comportant les étapes suivantes :
- refroidissement du mélange de piles à - 150°C suivi d'un chauffage à 600°C (destruction thermique par éclatement et distillation du mercure)
- dissolution des piles ouvertes à l'aide de $HNO_3$
- précipitation de l'argent sous forme de AgCl
- récupération de l'or sous forme d'amalgame en ajoutant du mercure
- récupération d'un mélange Fe, Cr, Al, Mn sous forme d'hydroxyde
- récupération de Cd et Ni par électrolyse (l'électrolyte comprenant un mélange d'ions Cl- et NO3-).

Objet de l'invention.

Le but de la présente invention est de recycler des piles boutons électriques usagées et d'autres objets métalliques pour éviter que des produits chimiques dangereux, en particulier le mercure, ne soient dispersés dans l'environnement; le but de la présente invention est également de récupérer les composants métalliques contenus dans les piles boutons électriques et d'autres objets, pour réemployer lesdits métaux dans des procédés métallurgiques ou dans la fabrication de piles.

Ce but est atteint par la présente invention à l'aide d'un procédé caractérisé en ce que les composants de ces piles et/ou autres objets sont séparés au moins partiellement à l'aide d'une dissolution anodique de ces piles et/ou autres objets, lesdites piles et/ou autres objets constituant eux-mêmes l'anode.

D'autres caractéristiques de la présente invention sont détaillées dans les revendications dépendantes.

Contrairement à d'autres procédés de recyclage d'accumulateurs électriques et de piles usagées, et en particulier contrairement à des procédés destinés au recyclage de piles boutons, le procédé selon la présente invention n'utilise pas une étape thermique ou mécanique de broyage, mais dissout lesdites piles boutons dans un acide approprié. Il a été reconnu par le déposant que malgré les différences de forme, de taille et de composition chimique, toutes les piles boutons ont une caractéristique commune : leur enveloppe extérieure est essentiellement métallique, peut être dissoute dans un acide approprié, et peut également conduire le courant électrique, et ce fait peut être mis à profit dans un procédé industriel. Selon un autre aspect de la présente invention, ladite dissolution n'est pas une simple dissolution chimique dans un acide approprié mais est une dissolution anodique. Les piles sont rassemblées et comprimées dans une enveloppe en plastique munie de parois grillagées, appelée panier anodique, de façon à être en contact conducteur (de l'électricité), pour former une anode à laquelle on applique une tension électrique (v. fig. 2). Ce panier anodique peut être construit par exemple en polypropylène, en polyéthylène ou en teflon. Ce mode opératoire particulier n'augmente pas seulement la vitesse de dissolution, mais constitue également une étape combinée de dissolution et de séparation.

Par conséquent, l'application simultanée d'un acide et du courant électrique produit un effet synergetique, c'est-à-dire, la dissolution et la séparation simulta née des composants des cellules en sous-groupes. Grâce à cette dissolution anodique, le matériau organique que comporte ces piles boutons (membrane en plastique, bague, caoutchouc, papier etc.) s'accumule dans le panier anodique et peut être éliminé. Par conséquent, aucune pyrolyse, qui entraînerait un mélange de matériau plus ou moins carbonisé avec les métaux et les oxydes métalliques, n'est nécessaire.

De plus, cette dissolution anodique conduit à une première séparation en produits cathodiques qui incluent des métaux tels que l'argent, le mercure, le zinc, le fer, le chrome, le nickel, et éventuellement le cuivre et le cadmium (si des piles nickel-cadmium font partie du mélange non trié de piles), et en produits anodiques qui incluent des oxydes de mercure, des oxydes d'argent, l'or, l'argent, le cuivre et l'oxyde de manganèse (si des piles boutons de type Zn-MnO$_2$ font partie de la matière première). Les proportions d'argent, de mercure et de cuivre présents dans le compartiment anodique et dans le compartiment cathodique dépendent de la composition initiale du mélange traité et des conditions opératoires de la dissolution anodique (température, durée, tension appliquée, ...) et de la composition de l'électrolyte (concentration en HBF$_4$, de ses sels, pH).

Selon un autre aspect de la présente invention, l'acide préféré pour effectuer le procédé est l'acide tétrafluoroborique. Cet acide présente plusieurs avantages par rapport à d'autres acides minéraux communément utilisés :

- certains acides tel que l'acide sulfurique dilué ne permettent pas de dissoudre l'acier et de récupérer le fer par électrolyse

- d'autres acides tel que l'acide chlorhydrique ou l'acide nitrique produisent des gaz dangereux aux électrodes (des oxydes d'azote ou du chlore) en se décomposant et ne peuvent pas être facilement régénérés.

Contrairement à d'autres acides minéraux, HBF$_4$ dissoud à peut près tous les métaux et en particulier les métaux lourds et précieux.

Selon un autre avantage de la présente invention, HBF$_4$ est régénéré au cours de l'électrolyse et peut être également récupéré par distillation (de préférence sous pression réduite pour éviter la décomposition). Une partie de l'acide tétrafluoroborique est consommée lors de la dissolution anodique par l'électrolyte des piles, principalement KOH. Les tétrafluoroborates alcalins qui s'accumulent progressivement sont récupérés par cristallisation des sels dissouts. Ceux-ci peuvent être décomposés par la chaleur en fluorures et en BF$_3$, à partir duquel HBF$_4$ peut être régénéré en faisant passer le BF$_3$ gazeux à travers une solution aqueuse de HF. Par conséquent, bien que l'acide tétrafluoroborique soit relativement cher, comparativement à d'autres acides minéraux, le coût en matière première, en ce qui concerne l'électrolyte, reste très bas dans le procédé selon la présente invention grâce à la possibilité de recycler et de récupérer complètement ledit acide tétrafluoroborique.

Selon un autre aspect de la présente invention, étant donné le pouvoir dissolvant de l'acide tétrafluoroborique et le fait que les piles boutons sont de petits objets avec une enveloppe métallique, le procédé selon la présente invention, bien que spécialement mis au point pour le recyclage des piles boutons, peut être également utilisé pour recycler d'autres objets métalliques et en récupérer les composants métalliques précieux : composants électroniques défectueux à enveloppe extérieure métallique, montres-bracelets, thermomètres à mercure, alliages spéciaux, etc...

Selon un autre aspect de la présente invention, revendiqué dans les revendications dépendantes 8, 9, 13, la séparation des composants métalliques des piles boutons, liée à la dissolution anodique desdites piles, peut être améliorée soit par un procédé en discontinu, soit par un procédé continu. Dans un procédé en discontinu, en fixant la tension électrique appliquée à la cellule d'électrolyse successivement à différentes valeurs, les métaux sont déposés successivement à la cathode, c'est-à-dire dans l'ordre Zn, le groupe [Fe + Cr + Ni], Hg, Ag, et sont récupérés en grattant ces métaux de la cathode, par exemple en utilisant une cathode tournante équipée de grattoirs (par exemple des cellules du type DIETZEL). De cette manière, les métaux peuvent être efficacement séparés. Dans un procédé en continu où le panier anodique est alimenté en continu en piles boutons, le compartiment cathodique peut être équipé de plusieurs cathodes placées à des distances différentes de l'anode et soumises à des tensions électriques différentes.

Selon un autre aspect de la présente invention, la boue anodique peut être facilement raffinée à l'aide d'une décomposition thermique couplée à une distillation du mercure. Cette étape de raffinage est effectuée en chauffant la boue anodique progressivement de 100 à 300° C et finalement à 500° C. Les oxydes d'argent et de mercure se décomposent selon les schémas de réaction :

$Ag_2O \rightarrow 2Ag + 1/2 \ O_2$ (250 à 300° C)

$HgO \rightarrow Hg + 1/2 \ O2$ (500° C)

$Hg_2O \rightarrow HgO + Hg$ (100° C)

Si seulement les trois types chimiques principaux de piles boutons disponibles dans le commerce sont présents dans le mélange à traiter initial, cette étape de procédé conduit à la récupération de mercure pur à partir du distillat et d'argent pur restant dans le four; si des oxydes de manganèse sont présents dans la boue anodique (lorsque des piles boutons $Zn/MnO_2$ sont présentes dans le mélange de départ) l'argent est facilement séparé des oxydes de manganèse par dissolution dans un acide. Si de l'or est présent, le mélange or-argent est séparé par des procédés connus ou directement réutilisé en bijouterie.

Selon un mode de réalisation préféré de la présente invention, les produits cathodiques sont d'abord séparés du mercure, qui peut y être présent, en distillant ce mercure à 500° C. Le résidu de distillation (sous forme de métaux mélangés, en poudre) est ensuite raffiné par électrolyse, par dissolution anodique dans l'acide tétrafluoroborique; le zinc est récupéré en fixant la tension électrique à 2 V. le groupe Fe + Cr + Ni est récupéré en fixant la tension électrique appliquée à 3 Volts, tandis que l'argent reste à l'anode.

Selon la composition chimique du mélange initial à traiter et les paramètres opératoires fixés par l'homme du métier pour la dissolution anodique des piles (durée, température, tension électrique, ...) de l'argent, du mercure éventuellement du cuivre, sous forme metallique, apparaissent à la fois à la cathode et à l'anode ou à une électrode seulement; s'ils apparaissent simultanément aux deux électrodes, il peut être économiquement utile selon des variantes de la présente invention, de mélanger les deux résidus de distillation avant traitement ultérieur, et de les raffiner ensemble par voie électrolytique, voire même de mélanger les produits anodiques aux produits cathodiques avant la distillation du mercure.

D'autres caractéristiques et avantages du procédé selon la présente invention apparaîtront mieux à l'aide des figures et de l'exemple donné.

Figures.

La figure 1 représente une vue partiellement en coupe d'une pile bouton ordinaire.
La figure 2 montre le récipient de dissolution anodique.

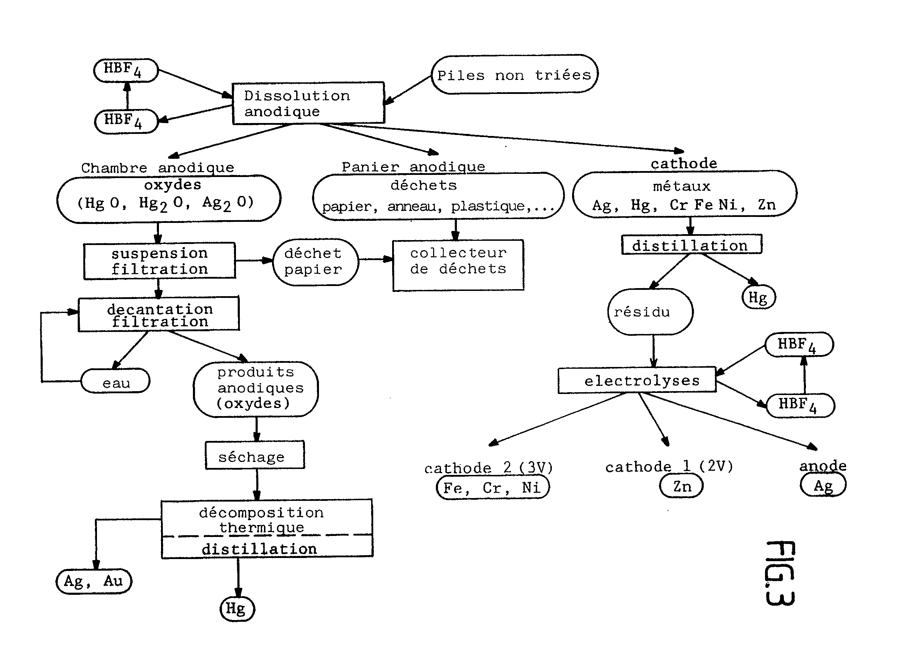

La figure 3 est un schéma du procédé dans son ensemble.

Exemple :

10 Kg d'un mélange de piles boutons comprenant les types $Zn/HgO$, $Zn/Ag_2O$ et $Zn/O_2$, provenant d'un magasin d'horlogerie, comportant également plusieurs montres-bracelets plaquées-or défectueuses ainsi qu'un thermomètre à mercure cassé sont versés dans un panier en teflon dans lequel pend une plaque-anode en acier. Le panier trempe dans un récipient en polyéthylène de 100 litres contenant environ 70 litres d'acide tétrafluoroborique a 20 %. Le récipient est fermé, une tension électrique de 4 V. est appliquée et la dissolution anodique est menée pendant 1 heure et demie. A cause de l'énergie libérée par les réactions chimiques et le courant électrique, la température monte jusqu'à 55° C et se maintient au dessus de 40° C. Le pH après une augmentation initiale dùe à la dissolution des parois extérieures des piles et à la réaction avec l'électrolyte des piles, est maintenu entre pH2 et pH4. Etant donné que de l'hydrogène est libéré autour de la cathode, de l'air frais est insuflé dans le récipient et est extrait à l'extrémité opposée du récipient pour éviter la formation de mélanges gazeux explosifs; ce mélange gazeux est filtré et purifié par une colonne de lavage (non montrée) et relâché dans l'atmosphère. Après la dissolution anodique, les produits restant dans le panier anodique se composent d'anneaux de plastique et de caoutchouc, de membranes, de grillage, de morceaux de papier, de graphite et d'un peu de verre cassé. Ce mélange, après lavage, peut être éliminé comme un déchet ordinaire. La boue anodique contient essentiellement des oxydes métalliques (poudre fine) et également quelques fragments de papier et graphite. Cette boue est mise en suspension aqueuse et filtrée grossièrement pour éliminer les fragments de papier ou de plastique; ceux-ci sont éliminés avec le contenu du panier anodique. Le filtrat est décanté et filtré, l'eau est réalimentée au procédé (lavage et suspension) et la boue anodique restante est amenée à l'étape suivante. La boue anodique est progressivement chauffée jusqu'à 500° C et cette température est maintenue pendant 120 minutes. Les vapeurs sont condensées à travers deux pièges à froid successifs; du mercure (à 99 %) est récupéré dans le premier piège à froid, tandis que des condensats aqueux, des poussières et du mercure sont récupérés dans le second piège à froid et ajoutés aux boues anodiques du prochain lot à traiter. 650 gr. de mercure sont récupérés ainsi. Le résidu de la décomposition thermique est refroidi et récupéré. Il se compose d'argent contenant des traces d'or (environ 0,01 %).

Les produits cathodiques sont soumis aux mêmes conditions opératoires pour la distillation; 420 gr. de mercure sont récupérés par distillation.

Le résidu de distillation cathodique est dissout sous courant électrique avec une solution d'acide tétrafluoroborique à 20 % en poids comprenant également $Zn(BF_4)_2$, de sorte que le pH est de l'ordre de 5, dans un récipient fermé en polyéthylène sous aération douce et constante; l'anode est en graphite et la cathode est en acier inoxydable. La tension électrique de la cellule est d'abord fixée à deux volts pendant 8 heures. 1,85 Kg de poudre métallique consistant en zinc à 95-99 % sont récupérés. Ensuite le voltage de la cellule est augmenté à 3 V. et maintenu à cette tension pendant 20 heures; 5,1 Kg de poudre métallique comprenant environ 90 % de fer, 3 % de nickel et 6 % de chrome sont récupérés. Dans le compartiment anodique reste une poudre métallique, composée d'argent avec des débris de graphite. Pendant l'électrolyse la température moyenne est de 45° C.

L'électrolyte est remplacé par $HBF_4$ pur (à 20 %) et l'électrolyse est reprise pendant 2 heures. 330 gr. d'argent (pureté > 99 %) sont récupérés à la cathode.

Bien que l'invention a été décrite à l'aide de ses modes de réalisation préférés, il est clair que des modifications et des variations peuvent être introduites sans sortir de l'étendue de la protection revendiquée.

## Revendications

1. Procédé de recyclage d'un mélange non trié de piles boutons usagées et/ou d'autres d'objets métalliques et de récupération de leurs composants métalliques, caractérisé en ce que les composants de ces piles et/ou autres objets sont séparés au moins partiellement par dissolution anodique de ces piles et/ou objets, lesdits piles et/ou objets constituant eux-mêmes l'anode.

2. Procédé selon la revendication 1, caractérisé en ce que ladite dissolution anodique est effectuée dans une solution aqueuse d'acide tétrafluoroborique et/ou de ses sels.

3. Procédé selon la revendication 2, caractérisé en ce que ladite dissolution anodique est effectuée à une température se situant entre 20° C et 90° C.

4. Procédé selon la revendication 3, charactérisé en ce que la concentration d'acide tétrafluoroborique dans ladite solution aqueuse se situe entre 0,1 % et 50% en poids et que le pH de ladite solution est ajusté entre pH1 et pH8.

5. Procédé selon l'une quelconque des revendications précédentes, caractérisé en ce que des oxydes métalliques s'accumulent dans le compartiment anodique sous forme d'une boue anodique, en tant que produits anodiques.

6. Procédé selon l'une quelconque des revendications précédentes, caractérisé en ce que des produits non métalliques s'accumulent dans un panier anodique dans le compartiment anodique.

7. Procédé selon l'une quelconque des revendications précédentes, caractérisé en ce que des métaux sont déposés, dans le compartiment cathodique, sur au moins une cathode.

8. Procédé en discontinu selon la revendication 7, caractérisé en ce que différents métaux, ou sous-groupes de métaux sont déposés successivement sur la cathode.

9. Procédé en continu selon la revendication 7, caractérisé en ce que, dans le compartiment cathodique, différents métaux ou sous-groupes de métaux sont déposés sur différentes cathodes.

10. Procédé selon l'une quelconque des revendications précédentes, caractérisé en ce que la boue anodique est réduite par décomposition thermique en un mélange de métaux et/ou de substances non métalliques volatiles et non volatiles.

11. Procédé selon l'une quelconque des revendications précédentes, caractérisé en ce que le mercure contenu dans la boue anodique réduite et dans les produits cathodiques est récupéré par distillation de ladite boue et desdits produits cathodiques.

12. Procédé selon la revendication 11, caractérisé en ce que les métaux contenus dans les résidus de distillation sont séparés par un procédé électrochimique utilisant une solution aqueuse d'acide tétrafluoroborique et/ou de ses sels comme électrolyte.

13. Procédé selon la revendication 12, caractérisé en ce que les résidus de distillation des produits cathodiques sont séparés par électrolyse, et que le zinc ainsi que le groupe contenant le fer, le chrome et le nickel sont déposés soit successivement sur une cathode ou simultanément sur différentes cathodes alors que l'argent reste à l'anode.

14. Procédé de recyclage d'un mélange non trié de piles boutons usagées et/ou d'autres objets métalliques et de récupération de leurs composants, selon la revendication 1, caractérisé par les étapes de procédé suivantes:

a. une dissolution anodique du mélange non trié par l'acide tétrafluoroborique et/ou ses sels;

b. séparation électrolytique complémentaire des produits obtenus dans l'étape précédente.

15. Procédé selon l'une quelconque des revendications précédentes, caractérisé en ce que les électrolytes constitués par les solutions d'acide tétrafluoroborique sont régénérés par distillation et que l'acide tétrafluoroborique régénéré est réutilisé comme solvant d'électrolyse, et que, si nécessaire, les substances dissoutes dans ledit électrolyte sont séparées par cristallisation ou par électrolyse pour régénérer l'électrolyte.

## Fig.1

## Fig.2

EP 0 412 935 A1

HBF$_4$

HBF$_4$

Piles non triées

Dissolution anodique

Chambre anodique
oxydes
(Hg O, Hg$_2$ O, Ag$_2$ O)

Panier anodique
déchets
papier, anneau, plastique,...

cathode
métaux
Ag, Hg, Cr Fe Ni, Zn

suspension filtration

déchet papier

collecteur de déchets

distillation

Hg

decantation filtration

résidu

eau

produits anodiques (oxydes)

HBF$_4$

electrolyses

HBF$_4$

séchage

décomposition thermique
distillation

cathode 2 (3V)
Fe, Cr, Ni

cathode 1 (2V)
Zn

anode
Ag

Ag, Au

Hg

FIG.3

Office européen
des brevets

**RAPPORT DE RECHERCHE
EUROPEENNE**

Numéro de la demande

**EP 90 81 0583**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 274 059  (RECYTEC)<br>* Colonne 4, lignes 31-46,57-58; colonne 5, lignes 1-4,21-33; colonne 6, lignes 8-12; revendications 1,4-6,8-9 *<br>— — — | 1-5,7,10, 14 | H 01 M 6/52<br>C 22 B 3/00<br>C 22 B 7/00 |
| A | EP-A-0 238 714  (PENNWALT)<br>* Page 5, lignes 25-44; revendications 1,3 *<br>— — — | 1-2 | |
| A | JOURNAL OF METALS, vol. 35, no. 8, Août 1983, pages 42-46, Warrendale, PA, US; E.R. COLE et al.: "Recovery of lead from battery sludge by electrowinning"<br>— — — — — | | |

| DOMAINES TECHNIQUES RECHERCHES (Int. Cl.5) |
|---|
| H 01 M<br>C 22 B |

Le présent rapport de recherche a été établi pour toutes les revendications

| Lieu de la recherche | Date d'achèvement de la recherche | Examinateur |
|---|---|---|
| La Haye | 08 novembre 90 | WITTBLAD U.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant